# EUROPÄISCHE PATENTANMELDUNG

(11) **EP 4 113 766 A1**
(43) Veröffentlichungstag der Anmeldung: **04.01.2023**
(21) Anmeldenummer: 21182335.6
(22) Anmeldetag: 29.06.2021
(51) Int. Cl.: H02G 3/22, H02G 3/04

(54) **VORRICHTUNG UND VERFAHREN ZUR ABDICHTUNG EINER LEITUNGSDURCHFÜHRUNG**

(71) Anmelder: Hilti Aktiengesellschaft, 9494 Schaan (LI)
(72) Erfinder: Paetow, Mario, 86899 Landsberg am Lech (DE)
(74) Vertreter: Hilti Aktiengesellschaft Corporate Intellectual Property

(57) **Zusammenfassung**

Die Erfindung betrifft eine Vorrichtung (1) zur Abdichtung einer Leitungsdurchführung, umfassend:
- ein hülsenartiges Gehäuse (2), das einen axialen Durchlasskanal mit einem recht- oder sechseckigen Querschnitt und zwei offenen Stirnseiten (3, 4) aufweist;
- einen recht- oder sechseckigen Einpassrahmen (5), der an einer ersten Stirnseite (3) des Gehäuses (2) einsetzbar oder dauerhaft befestigt ist; sowie
- eine im Durchlasskanal von der ersten Stirnseite (3) zu der zweiten Stirnseite (4) aufgespannte luftdichte elastische Membran (7), deren erster Rand entlang eines gesamten Umfangs des Einpassrahmens (5) an diesem befestigt ist und deren gegenüberliegender zweiter Rand entlang eines gesamten Umfangs der zweiten Stirnseite (4) des Gehäuses (2) befestigt ist;
- wobei die Membran (7) den Durchlasskanal um einen mittig darin liegenden Leitungsdurchführungspunkt (8) luftdicht verschließt, indem oder wenn der an der ersten Stirnseite (3) des Gehäuses (2) fixierte Einpassrahmen (5) zusammen mit der daran befestigten Membran (7) um einen vorbestimmten Verdrehungswinkel bezüglich der zweiten Stirnseite (4) des Gehäuses (2) verdreht angeordnet ist und die Membran (7) dadurch gespannt ist.

## Beschreibung

Die Erfindung betrifft eine Vorrichtung und ein Verfahren zur Abdichtung einer Leitungsdurchführung, beispielsweise für Kabel, die durch eine Wand oder Decke eines Gebäudes geführt werden sollen. Die Vorrichtung weist ein hülsenartiges Gehäuse mit einem recht- oder sechseckigen Querschnitt auf, das einen axialen Durchlasskanal zum Durchführen von Leitungen begrenzt, auf dessen Abdichtung sich die Erfindung richtet. Insbesondere handelt es sich dabei um eine brandschutzgerechte Abdichtung, im Speziellen gegen Rauchgase. Es kann sich auch um Abdichtungen ohne Brandschutzanforderungen handeln, um beispielsweise eine gewünschte Dichtigkeit in klimatisierten Räumen oder eine Gasdichtigkeit beispielsweise bezüglich Kohlendioxid oder Edelgas zu erzielen.

Im Stand der Technik sind verschiedenartige Brandschutz-Kabelboxen zur Abschottung, d. h. brandschutzgerechten Versiegelung, von Kabeldurchführungen durch eine Wand oder Decke eines Gebäudes bekannt. Sie umfassen in der Regel eine Durchführungshülse, die in einem Wand- oder Deckendurchbruch installierbar ist, um ihn zu verschließen und dabei einen Durchlasskanal zur Durchführung von Kabeln zu bilden. Der Durchlasskanal muss in ausreichendem Maße gegen Rauch, Gase und andere Medien, die sich in einem Brandfall im Gebäude bilden können, abgedichtet werden. Dadurch soll eine Ausbreitung des Brands und schädlicher Brandprodukte wie Rauch und Gase aus einem betroffenen Raum in andere Räume durch die Leitungsdurchführung weitgehend verhindert werden.

Es sind grundsätzlich zwei Typen von derartigen Durchführungshülsen bekannt. Der eine Typ ist mit einem Abdichtungssystem ausgestattet, welches sich beim Durchstecken der Kabel dem Widerstand beugt. Konkrete Realisierungen und Handhabung gestalten sich jedoch als schwierig, da entweder die Kabel nicht einfach gegen den Widerstand durch das System zu führen sind und/oder nur schlechte Abdichtung und Kaltrauchdichtigkeit erreichbar sind.

Ein anderer Typ von Durchführungshülsen muss nach dem Einführen der Leitungen von einer Stirnseite aus dauerhaft oder lösbar verschlossen und abgedichtet werden. Ein Problem bei mechanisch zu schließenden Systemen besteht darin, dass es in der Praxis vergessen werden kann, das System zu schließen. Ein anderes Problem ist eine korrekte Ausführung der Abdichtung. Ein Vorteil ist wiederum, dass diese Systeme im Vergleich zum ersteren Typ deutlich dichter sein können. Außerdem erfolgt die Kabelbelegung ohne Widerstand.

Es ist Aufgabe der vorliegenden Erfindung, eine Vorrichtung und ein entsprechendes Verfahren zur Abdichtung einer Leitungsdurchführung bereitzustellen, welche sowohl eine zuverlässige Rauchgasdichtigkeit als auch eine Sicherheit gegen Fehlanwendungen bei gleichzeitiger Möglichkeit einer nachträglichen Belegung mit weiteren Leitungen bieten können.

Diese Aufgabe wird durch eine Vorrichtung gemäß Anspruch 1 zur Abdichtung einer Leitungsdurchführung sowie durch ein zugehöriges Verfahren gemäß den nebengeordneten Ansprüchen gelöst. Weitere Ausgestaltungen sind in den abhängigen Ansprüchen angegeben. Die Leitungsdurchführung kann insbesondere elektrische Kabel, aber auch Rohre oder andersartige Leitungen betreffen, die durch einen Brandabschnitt geführt werden sollen.

Gemäß einem ersten Aspekt ist eine Vorrichtung zur Abdichtung einer Leitungsdurchführung vorgesehen. Die Vorrichtung umfasst ein hülsenartiges Gehäuse (Kabel-Sleeve), das einen axialen Durchlasskanal mit einem rechteckigen oder sechseckigen Querschnitt und zwei offenen Stirnseiten aufweist. Ein rechteckiger Querschnitt kann dabei, muss jedoch nicht zwingend, quadratisch sein. Die rechteckige Geometrie kann aus verschiedenen Gründen, wie beispielsweise einer einfacheren Herstellung oder Handhabung, gegenüber einer sechseckigen Querschnittsgeometrie bevorzugt sein. Die hierin nachfolgend beschriebene Funktionalität ist jedoch auch mit einem sechseckigen Querschnitt realisierbar, wobei es sich insbesondere um ein gleichseitiges oder sogar reguläres (d. h. untereinander gleiche Winkel besitzendes) Sechseck handeln kann. Durch eine rechteckige oder sechseckige Form ist auch die Anordnung mehrerer Kabel-Sleeves nebeneinander ohne Platzverlust möglich und es können deutlich mehr Kabel pro Fläche durchgeführt werden als bei einer runden Ausgestaltung.

Die Vorrichtung umfasst ferner einen rechteckigen beziehungsweise sechseckigen Einpassrahmen, der passgenau zum Einsetzen an einer ersten Stirnseite des Gehäuses ausgebildet ist oder dauerhaft daran fixiert ist. Im Durchlasskanal ist eine luftdichte elastische Membran angeordnet, die sich von Stirnseite zu Stirnseite erstreckt und hierzu mit einem Ende am Einpassrahmen und mit dem anderen Ende an der zweiten Stirnseite des Gehäuses befestig ist. Dabei ist deren erster Rand (Ende) entlang eines gesamten Umfangs des Einpassrahmens an diesem befestigt und deren gegenüberliegender zweiter Rand (Ende) entlang eines gesamten Umfangs der zweiten Stirnseite am Gehäuse befestigt.

Dabei verschließt die Membran den Durchlasskanal luftdicht, indem bzw. wenn der an der ersten Stirnseite des Gehäuses fixierte Einpassrahmen zusammen mit der daran befestigten Membran um einen vorbestimmten Verdrehungswinkel - beispielsweise um 90°, 180° oder mehr - bezüglich der zweiten Stirnseite des Gehäuses um die Durchlasskanal-Achse verdreht und die Membran dadurch zu einer gewissen mechanischen Vorspannung gespannt ist/wird. Durch diese Verdrehung wird von der Membran ein etwa mittig im Durchlasskanal liegender Leitungsdurchführungspunkt luftdicht umschlossen, durch welchen eine oder mehrere Leitungen verlaufen können.

Ein für den luftdichten Verschluss erforderlicher Verdrehungswinkel hängt von den spezifischen Abmessungen des Gehäuses ab, wobei in aller Regel ein Verdrehungswinkel von 180° sowohl eine hervorragende Rauch- und Gasdichtigkeit als auch eine ausreichend gute Zugänglichkeit des abgedichteten Kanals für das Einführen von Kabeln bietet. Ein rechteckiger Querschnitt mit paarweise verschiedenen Seitenkanten bedeutet in diesem Fall bereits eine ausrechende Absicherung gegen etwaige Fehlanwendung, falls der Einpassrahmen vom Anwender selbst verdreht werden kann oder soll.

Eine Idee der vorliegenden Erfindung besteht somit in der Erstellung eines möglichst gas- bzw. luftdichten, rechteckigen, für nachträgliche Installation (Retrofit) geeigneten und gegen Fehlanwendungen sicheren Kabel-Sleeves, indem der Durchlasskanal durch eine von Stirnseite zu Stirnseite aufgespannte, die Leitungen umschließende, um die Kanalachse um beispielsweise 180° verdrehte luftdichte elastische Membran abgedichtet ist. Durch den rechteckigen Querschnitt ist auch ein eigenständiges Aufdrehen der Vorrichtung sicher verhindert und es ist keine zusätzliche Arretierung nötig.

In Bezug auf die Wahl geeigneter Materialien für die Vorrichtung besteht grundsätzlich keine Beschränkung, sofern sie sich für die hierin beschriebene Funktionalität eignen. Beispielsweise kann die Membran aus einem Material wie Silikon oder Butylkautschuk mit hoher Dehnbarkeit und Elastizität bestehen. Das Gehäuse kann beispielsweise aus Stabilitäts- und Feuerfestigkeitsgründen metallbasiert sein, etwa aus verzinktem Blech. Der Einpassrahmen kann insbesondere aus Metall oder Kunststoff gefertigt sein.

Die Membran kann dabei insbesondere als ein einzelner rechteckiger Streifen oder als mehrere, beispielsweise je nach Querschnittsgeometrie vier bzw. sechs, rechteckige Streifen ausgebildet sein. Die in Umlaufrichtung aneinandergrenzenden Streifenränder können zur Erhöhung der Dichtungswirkung jeweils mit Überlapp in Umlaufrichtung aufeinandertreffen. Jeder Membranstreifen liegt bei einem Verdrehungswinkel von 0° zwischen dem Einpassrahmen und der zweiten Stirnseite im Wesentlichen an einer, mehreren oder allen Innenseiten des Durchlasskanals an (d. h. erstreckt sich mehr oder weniger entlang diesen und nah daran, mit oder ohne Vorspannung), sodass die Membran die Innenseiten des Durchlasskanals insgesamt vollständig abdeckt. Alternativ kann die Membran einen in Umfangsrichtung zusammenhängenden Mantel bilden, der bei einem Verdrehungswinkel von 0° zwischen dem Einpassrahmen und der zweiten Stirnseite ebenfalls im Wesentlichen an Innenwänden des Durchlasskanals anliegt (d. h. sich mehr oder weniger entlang diesen und nah daran erstreckt, mit oder ohne Vorspannung).

Der Einpassrahmen kann bereits von vorn herein (beispielsweise bei der Herstellung oder Auslieferung der Vorrichtung an Endabnehmer) in der genannten abdichtenden Anordnung an der ersten Stirnseite des Gehäuses eingesetzt oder fixiert sein, d. h. zusammen mit der daran befestigten Membran um den vorbestimmten Verdrehungswinkel bezüglich der zweiten Stirnseite verdreht sein. Die Fixierung kann irreversibel sein, sodass der Einpassrahmen in diesem Fall die erste Stirnseite des Gehäuses bildet.

Gemäß einer Ausführungsform weist das Gehäuse in diesem Fall außenseitig einen Öffnungsfalz, beispielsweise in Form einer Nut, einer Fuge oder eines nur von einer dünnen Abdeckfolie überdeckten Schlitzes, auf. Der Öffnungsfalz erstreckt sich in axialer Richtung geradlinig diagonal von einer Ecke der ersten Stirnseite zu einer diesbezüglich um den vorbestimmten Verdrehungswinkel versetzt angeordneten Ecke der zweiten Stirnseite und ist zum Öffnen des Gehäuses von außen (beispielsweise durch ein vergleichsweise einfaches Aufschneiden des Öffnungsfalzes mit einem Messer) ausgebildet. Dabei weist auch die verdrehte Membran einen entlang des Öffnungsfalzes des Gehäuses verlaufenden Schlitz auf, sodass der von der Membran abgedichtete Durchlasskanal durch das Öffnen des Gehäuses sich in wiederverschließbarer Weise zum Einlegen von Leitungen öffnet.

Bei der Abdichtung der Vorrichtung kann es sich insbesondere um eine brandschutzgerechte Abdichtung, beispielsweise gegen Rauch, gegebenenfalls aber auch gegen Giftgase, Wasser und andere Medien, die sich im Brandfall im Gebäude bilden oder ins Gebäude dringen können, handeln. Dadurch kann eine Ausbreitung des Brands und schädlicher Brandprodukte aus einem betroffenen Raum in andere Räume durch die Leitungsdurchführung verhindert werden. Insbesondere kann die Vorrichtung hierzu auch weitere Brandschutzeinrichtungen im Durchlasskanal aufweisen, die an seinen Innenseiten angebracht sind und flammhemmendes und/oder intumeszierendes, d. h. unter Hitzeeinwirkung aufschäumendes und den Durchlasskanal zusätzlich verschließendes, Material umfassen. Durch umlaufende intumeszierende Materialstreifen innenseitig des Gehäuses ist z. B. in bekannter Weise eine Hochfeuerbeständigkeit bzw. Funktionserhalt über 120 Minuten gemäß DIN 4102-2 erreichbar. Eine weitere Möglichkeit ist beispielsweise ein Vorhang aus gewissermaßen flexiblen Gewebestreifen, die mit intumeszierendem Material beschichtet sind. Ein solcher Vorhang kann beispielsweise an einer oder an beiden Stirnseiten vorgesehen sein, um die jeweilige Stirnseite im Normallfall zumindest optisch und im Brandfall durch das aufschäumende intumeszierende Material branddicht zu verschließen. Hierzu können beispielsweise Reihen von beschichteten Gewebestreifen an gegenüberliegenden Wänden einer Stirnseite befestigt sein und sich etwa radial zur Kanalmitte/-Achse hin erstrecken, wo sie mit Überlapp aufeinandertreffen und den Kanal dadurch verschließen. Durch deren Flexibilität können die Gewebestreifen so ausgebildet sein, dass sie beim Einführen einer Leitung in den Durchlasskanal seitlich ausweichen und sich dabei abdichtend um die Leitung herumlegen.

Gemäß einem weiteren Aspekt ist ein Verfahren zur Abdichtung einer Leitungsdurchführung mit einer Vorrichtung der hierin dargelegten Art vorgesehen. Eine erste mögliche Verfahrensvariante umfasst folgende Schritte:
- Bereitstellen oder Einsetzen des Einpassrahmens an der ersten Stirnseite des Gehäuses in einer Lage, bei der er bezüglich der zweiten Stirnseite des Gehäuses einen Verdrehungswinkel von 0° bildet (d. h. nicht verdreht ist) und sich die Membran von Stirnseite zu Stirnseite des Gehäuses ohne axiale Verdrehung erstreckt und daher in etwa an Innenwänden des Durchlasskanals anliegt. Bei dieser Anordnung steht der von der Membran ausgekleidete Durchlasskanal somit über seinen gesamten Querschnitt offen;
- Einführen von Leitungen, insbesondere eines Einzelkabels oder auch Kabelbündels, in den Durchlasskanal; und
- anschließendes Abdichten des Durchlasskanals um die darin durchgeführten Leitungen durch das Verdrehen des Einpassrahmens um den vorbestimmten Verdrehungswinkel von mindestens 90° (bei einem quadratischen Querschnitt) oder von mindestens 180° (bei einem anderen rechteckigen Querschnitt) bezüglich der zweiten Stirnseite des Gehäuses und Fixieren des Einpassrahmens an der ersten Stirnseite des Gehäuses in dieser abdichtenden Anordnung.

Bei einer weiteren Variante des Verfahrens wird die Vorrichtung von vorn herein mit der genannten abdichtenden Anordnung des Einpassrahmens an der ersten Stirnseite des Gehäuses bereitgestellt oder in diese versetzt, sodass die Membran den Durchlasskanal um einen mittig darin liegenden Leitungsdurchführungspunkt luftdicht verschließt. Leitungen wie Einzelkabel oder Kabelbündel können einfach durch die Mitte dieser Membranabdichtung hindurchgeführt werden, ohne dass ein Öffnen (erneutes Aufdrehen) des Einpassrahmens gegenüber dem Gehäuserahmen notwendig ist. Auf diese Weise wird eine Fehlanwendung des Monteurs verhindert. Diese Variante bietet auch deshalb eine ideale Anwendungssicherheit, weil das System ständig geschlossen ist und auch zum Nachbelegen nicht geöffnet werden muss.

Eine damit kombinierbare weitere Verfahrensvariante bezieht sich auf die obige Ausführungsform, bei der der Einpassrahmen und damit die Membran von vorn herein gemäß der abdichtenden Anordnung verdreht sind und die Vorrichtung zusätzlich mit einem Öffnungsfalz ausgestattet ist. Zum Durchführen von Leitungen wie Einzelkabel oder Kabelbündeln kann das Gehäuse entlang des Öffnungsfalzes geöffnet werden, wodurch auch die verdrehte und entlang des Öffnungsfalzes unterbrochene Membran geöffnet wird. Leitungen können bequem durch diese Öffnung in den Kanal reingelegt bzw. hinzugefügt werden. Die Vorrichtung wird anschließend wieder verschlossen, indem der Öffnungsfalz wieder geschlossen wird und dadurch der Durchlasskanal samt den darin durchgeführten Leitungen wieder abgedichtet ist.

Die obigen Aspekte, Ausführungsformen und spezifische Ausgestaltungen der Erfindung werden nachfolgend anhand der in den Zeichnungen dargestellten Ausführungsbeispiele näher erläutert. Die Zeichnungen sind schematisch. Sie können, müssen jedoch nicht als maßstabsgetreu zu verstehen sein. Es zeigen:
- Figur 1: ein Beispiel einer Vorrichtung der hierin dargelegten Art bei nicht verdrehter Anordnung eines Einpassrahmens samt Membran;
- Figur 2: Vorrichtung der Fig. 1 bei einer abdichtenden (um 180° verdrehten) Anordnung des Einpassrahmens mit Membran; und
- Figur 3: Vorrichtung der Fig. 2 im axialen Längsschnitt.

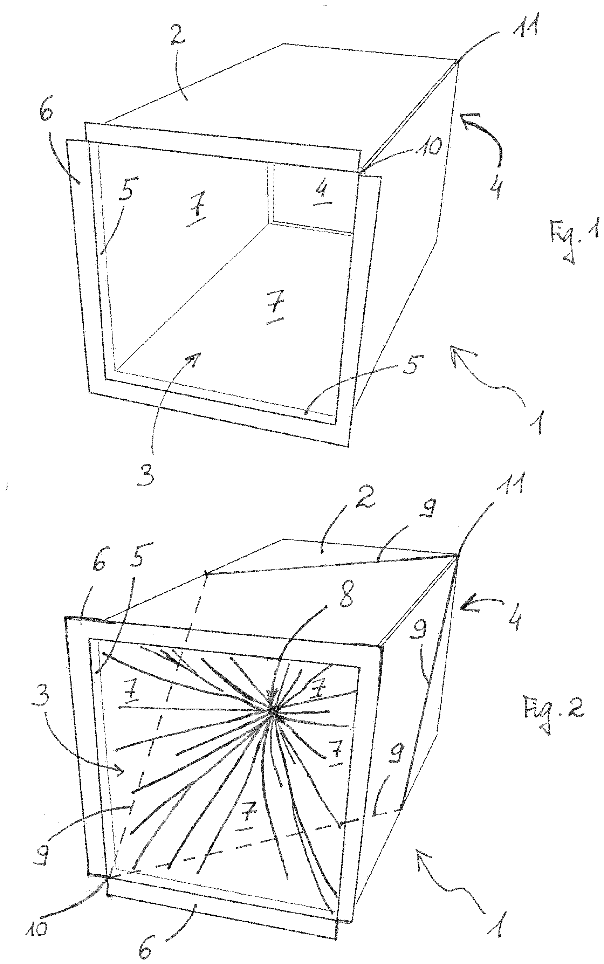

Fig. 1 zeigt in einer perspektivischen Ansicht ein Ausführungsbeispiel einer Vorrichtung 1 zur Abdichtung einer Leitungsdurchführung. Die Vorrichtung 1 umfasst ein hülsenartiges Gehäuse 2, das einen axialen Durchlasskanal mit einem rechteckigen Querschnitt und zwei offenen Stirnseiten 3 und 4 begrenzt. In der ersten Stirnseite 3 ist ein Einpassrahmen 5 eingesetzt, dessen umlaufender Flansch 6 hier an der ersten Stirnseite 3 außenseitig anliegt.

Ein unter mechanischer Spannung stehendes Abdichten des Durchlasskanals ist dabei mittels einer luftdichten elastischen Membran 7 aus Silikon oder Kautschuk ermöglicht, die von der zweiten Stirnseite 4 zu dem Einpassrahmen 5 gespannt ist und sich in Fig. 1 entlang der Innenseiten des Durchlasskanals erstreckt. Die Membran 7 verbindet also den Einpassrahmen 5 mit dem Gehäuse 2 an dessen zweiter Stirnseite 4. Sie kann als vier Streifen oder als ein umlaufender Mantel mit oder ohne einen axialen Öffnungsschlitz ausgeführt sein.

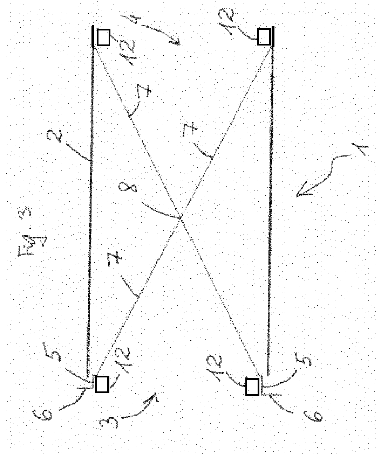

Wie Fig. 2 zeigt, wird die Membran 7 ausgehend von der Anordnung der Fig. 1 durch ein Verdrehen des Einpassrahmens 5 zum Gehäuse 2 z. B. um 180° in axialer Richtung gespannt und in der Mitte zusammengeführt, sodass ein luftdichter Verschluss des Durchlasskanals entsteht. Diese abdichtende Anordnung ist zusätzlich in einem axialen Längsschnitt in Fig. 3 dargestellt. Einzelkabel oder auch Kabelbündel können nun einfach durch einen mittig im Durchlasskanal liegenden Leitungsdurchführungspunkt 8 dieser Membranabdichtung hindurchgeführt werden, ohne dass ein Öffnen (erneutes Aufdrehen) des Einpassrahmens 5 gegenüber dem Gehäuse 2 notwendig ist. Auf diese Weise wird eine Fehlanwendung durch einen Monteur gänzlich verhindert. Beispielsweise kann die Vorrichtung 1 (Elastic Speed Sleeve Box) mit der in Fig. 2 und 3 gezeigten verdrehten Anordnung des Einpassrahmens 5 und der daran befestigten Membran 7 ausgeliefert und zum Einlegen von Kabeln optional bei der Erstinstallation entspannt und geöffnet werden (Fig. 1).

Die Vorrichtung 1 kann alternativ oder zusätzlich als Ganzes entlang eines außenseitig am Gehäuse 2 optional vorgesehenen Öffnungsfalzes 9 geöffnet werden, damit Kabel als Retrofit bei schon installierten Kabeln um diese herumgebracht und wieder verschlossen werden können. Der Öffnungsfalz 9 verläuft dabei jeweils diagonal und geradlinig von der in Fig. 2 unteren linken Ecke 10 des Einpassrahmens 5 zu der um 180° versetzt liegenden oberen rechten Ecke 11 der zweiten Stirnseite 4. Die Membran 7 besitzt einen entsprechend verlaufenden Schlitz. Das so zu öffnende Gehäuse 2 (und der Einpassrahmen 5) ist also zweiteilig ausgebildet. Es ist hier auch möglich, den Einpassrahmen 5 durch eine feste (endgültige) Verbindung mit dem Gehäuse 2 im verdrehten Zustand der Membran 7 gemäß Fig. 2-3 zu ersetzen.

Wie in Fig. 3 schematisch angedeutet, können im Durchlasskanal optional Brandschutzeinrichtungen 12 vorgesehen sein, die an seinen Innenseiten angebracht sind und flammhemmendes und/oder intumeszierendes Material umfassen. In Fig. 3 sind die Brandschutzeinrichtungen 12 am Einpassrahmen 5 und an der zweiten Stirnseite 4 des Gehäuses 2, jeweils außenseitig der Membran 7, angebracht, um den Durchlasskanal im Brandfall zusätzlich branddicht zu verschließen. Brandschutzeinrichtungen 12 können beispielsweise als umlaufende intumeszierende Materialstreifen oder als ein Vorhang aus flexiblen und mit intumeszierendem Material beschichteten Gewebestreifen ausgebildet sein, wie weiter oben ausführlicher beschrieben.

Der Querschnitt des Durchlasskanals und des Einpassrahmens 5 kann in allen Beispielen anstelle einer rechteckigen auch eine sechseckige Geometrie haben.

## Patentansprüche

1. Vorrichtung (1) zur Abdichtung einer Leitungsdurchführung, umfassend:
- ein hülsenartiges Gehäuse (2), das einen axialen Durchlasskanal mit einem recht- oder sechseckigen Querschnitt und zwei offenen Stirnseiten (3, 4) aufweist;
- einen recht- oder sechseckigen Einpassrahmen (5), der passgenau an einer ersten Stirnseite (3) des Gehäuses (2) einsetzbar oder dauerhaft befestigt ist; sowie
- eine im Durchlasskanal von der ersten Stirnseite (3) zu der zweiten Stirnseite (4) aufgespannte luftdichte elastische Membran (7), deren erster Rand entlang eines gesamten Umfangs des Einpassrahmens (5) an diesem befestigt ist und deren gegenüberliegender zweiter Rand entlang eines gesamten Umfangs der zweiten Stirnseite (4) am Gehäuse (2) befestigt ist;
- wobei die Membran (7) den Durchlasskanal um einen mittig darin liegenden Leitungsdurchführungspunkt (8) luftdicht verschließt, indem oder wenn der an der ersten Stirnseite (3) des Gehäuses (2) fixierte Einpassrahmen (5) zusammen mit der daran befestigten Membran (7) um einen vorbestimmten Verdrehungswinkel bezüglich der zweiten Stirnseite (4) des Gehäuses (2) verdreht angeordnet ist und die Membran (7) dadurch gespannt ist.

2. Vorrichtung (1) nach Anspruch 1, wobei
- der vorbestimmte Verdrehungswinkel 180° beträgt.

3. Vorrichtung (1) nach Anspruch 1 oder 2, wobei
- der Querschnitt des Durchlasskanals und des Einpassrahmens (5) rechteckig ist.

4. Vorrichtung (1) nach einem der Ansprüche 1 bis 3, wobei
- die Membran (7) als ein einzelner rechteckiger Streifen oder als mehrere, insbesondere vier oder sechs, rechteckige Streifen ausgebildet ist, die bei einem Verdrehungswinkel von 0° zwischen dem Einpassrahmen (5) und der zweiten Stirnseite (4) im Wesentlichen an Innenseiten des Durchlasskanals anliegen und diese insgesamt vollständig abdecken.

5. Vorrichtung (1) nach einem der Ansprüche 1 bis 3, wobei
- die Membran (7) einen in Umfangsrichtung zusammenhängenden Mantel bildet, der bei einem Verdrehungswinkel von 0° zwischen dem Einpassrahmen (5) und der zweiten Stirnseite (4) im Wesentlichen an Innenwänden des Durchlasskanals anliegt.

6. Vorrichtung (1) nach Anspruch 4, wobei
- der Einpassrahmen (5) in der genannten abdichtenden Anordnung an der ersten Stirnseite (3) des Gehäuses (2) eingesetzt oder fixiert ist; und
- das Gehäuse (2) außenseitig einen Öffnungsfalz (9) aufweist, der sich in axialer Richtung geradlinig diagonal von einer Ecke (10) der ersten Stirnseite (3) zu einer diesbezüglich um den vorbestimmten Verdrehungswinkel versetzt angeordneten Ecke (11) der zweiten Stirnseite (4) erstreckt und zum Öffnen des Gehäuses (2) von außen ausgebildet ist;
- wobei auch die Membran (7) einen entlang des Öffnungsfalzes (9) des Gehäuses (2) verlaufenden Schlitz zwischen aneinandergrenzenden axialen Streifenrändern aufweist, sodass der von der Membran (7) abgedichtete Durchlasskanal durch das Öffnen des Gehäuses (2) entlang des Öffnungsfalzes (9) sich ebenfalls in wiederverschließbarer Weise öffnet.

7. Vorrichtung (1) nach einem der vorhergehenden Ansprüche, ferner umfassend
- Brandschutzeinrichtungen (12) im Durchlasskanal, die an seinen Innenseiten angebracht sind und flammhemmendes und/oder intumeszierendes Material umfassen.

8. Verfahren zur Abdichtung einer Leitungsdurchführung in einer Vorrichtung (1) nach einem der vorhergehenden Ansprüche, umfassend die Schritte:
- Bereitstellen oder Einsetzen des Einpassrahmens (5) an der ersten Stirnseite (3) des Gehäuses (2) in einer Lage, bei der er bezüglich der zweiten Stirnseite (4) des Gehäuses (2) einen Verdrehungswinkel von 0° bildet und sich die Membran (7) von Stirnseite zu Stirnseite des Gehäuses (2) ohne axiale Verdrehung erstreckt, im Wesentlichen an Innenwänden des Durchlasskanals anliegend;
- Einführen von Leitungen, insbesondere eines oder mehrerer Kabel, in den Durchlasskanal; und
- anschließendes Abdichten des Durchlasskanals um die darin durchgeführten Leitungen durch das Verdrehen des Einpassrahmens (5) um einen Verdrehungswinkel von mindestens 90° oder 180° bezüglich der zweiten Stirnseite (4) des Gehäuses (2).

9. Verfahren zur Abdichtung einer Leitungsdurchführung in einer Vorrichtung (1) nach einem der Ansprüche 1 bis 7, umfassend die Schritte:
- Bereitstellen oder Einsetzen des Einpassrahmens (5) an der ersten Stirnseite (3) des Gehäuses (2) in der genannten abdichtenden Anordnung, sodass die Membran (7) den Durchlasskanal um einen mittig darin liegenden Leitungsdurchführungspunkt (8) luftdicht verschließt;
- Einführen von Leitungen, insbesondere eines oder mehrerer Kabel, in den Durchlasskanal durch diesen Leitungsdurchführungspunkt (8) hindurch.

10. Verfahren zur Abdichtung einer Leitungsdurchführung in einer Vorrichtung (1) nach Anspruch 6, umfassend die Schritte:
- Öffnen des Gehäuses (2) entlang des Öffnungsfalzes (9), wodurch auch die axial verdrehte und entlang des Öffnungsfalzes (9) unterbrochene Membran (7) geöffnet wird;
- Einlegen von Leitungen, insbesondere eines oder mehrerer Kabel, in den auf diese Weise seitlich geöffneten Durchlasskanal;
- anschließendes Wiederverschließen des Öffnungsfalzes (9) und damit des Durchlasskanals samt den darin durchgeführten Leitungen.
